# EUROPÄISCHE PATENTANMELDUNG

(11) **EP 3 034 473 A1**
(43) Veröffentlichungstag der Anmeldung: **22.06.2016**
(21) Anmeldenummer: 15199797.0
(22) Anmeldetag: 14.12.2015
(51) Int. Cl.: C02F 1/44

(54) **VERFAHREN UND VORRICHTUNG ZUR BEHANDLUNG EINER WÄSSRIGEN STOFFMISCHUNG**

(30) Priorität: 17.12.2014 AT 509192014
(71) Anmelder: Wenger-Öhn, Hermann, 4880 St. Georgen im Attergau (AT); Zuschrader, Christian, 4224 Wartberg/Aist (AT)
(72) Erfinder: Wenger-Öhn, Hermann, 4880 St. Georgen im Attergau (AT); Zuschrader, Christian, 4224 Wartberg/Aist (AT)
(74) Vertreter: Patentanwaltskanzlei Hübscher

(57) **Zusammenfassung**

Es wird ein Verfahren und eine Vorrichtung zur Behandlung einer wässrigen Stoffmischung (8) beschrieben, die ein Puffersystem bildet. Um vorteilhafte Behandlungsverhältnisse zu schaffen, wird vorgeschlagen, dass wenigstens eine das Dissoziationsgleichgewicht des Puffersystems verschiebende Komponente durch ein wässriges Lösungsmittel aus der wässrigen Stoffmischung (8) abgeschieden wird, in das die abzuscheidende Komponente durch eine poröse Trennschicht (9) zwischen der Stoffmischung (8) und dem Lösungsmittel diffundiert.

## Beschreibung

Die Erfindung bezieht sich auf ein Verfahren zur Behandlung einer wässrigen Stoffmischung, die ein Puffersystem bildet, sowie auf eine Vorrichtung zur Durchführung des Verfahrens.

Die technisch relevanten Eigenschaften biologischer, wässriger Stoffmischungen, die ein Puffersystem bilden, werden durch eine aufgrund der Pufferwirkung bedingte Anreicherung von Reaktionskomponenten, wie Hydrogencarbonat und Kohlendioxid oder Ammonium und Ammoniak, aber auch von salzartigen Rückständen, wie Chloriden, Nitraten, Sulfaten oder Phosphaten von Kalium, Magnesium oder Kalzium, beeinträchtigt. Diese Stoffe reichern sich reaktionsbedingt an und bilden stabile Mischsysteme, die zu unerwünschten technologischen Eigenschaften, beispielsweise zu einer schlechten Entwässerung, einer ungünstigen Trocknung, einer schlechteren Qualität des Reaktionsergebnisses oder zu Geruchsemissionen und dgl., führen können.

Der Erfindung liegt somit die Aufgabe zugrunde, ein Verfahren zur Behandlung von reagierenden Stoffmischungen anzugeben, das die durch die Pufferwirkung bedingte, sich nachteilig auswirkende Anreicherung von Reaktionskomponenten bzw. salzartigen Rückständen unterbindet, sodass dadurch auf das Reaktionsergebnis Einfluss genommen werden kann.

Die Erfindung löst die gestellte Aufgabe dadurch, dass wenigstens eine das Dissoziationsgleichgewicht des Puffersystems verschiebende Komponente durch ein wässriges Lösungsmittel aus der wässrigen Stoffmischung abgeschieden wird, in das die abzuscheidende Komponente durch eine poröse Trennschicht zwischen der Stoffmischung und dem Lösungsmittel diffundiert.

Aufgrund der porösen Trennschicht zwischen der wässrigen Stoffmischung und dem wässrigen Lösungsmittel kommt es zufolge eines osmotischen Druckgefälles zu einer Diffusion zwischen dem wässrigen Lösungsmittel und der wässrigen Stoffmischung, wobei auf das Dissoziationsgleichgewicht in der wässrigen Stoffmischung Einfluss nehmende Komponenten laufend aus der Stoffmischung in das Lösungsmittel diffundieren. Die dabei auftretende, geringfügige Lösungsmitteldiffusion spielt keine Rolle, weil es sich sowohl bei der Stoffmischung als auch beim Lösungsmittel um wässrige Systeme handelt. Im Gegenteil, das wässrige Lösungsmittel kann auch zum Eintrag von gelösten Stoffen in die Stoffmischung durch Diffusion genützt werden, beispielsweise wenn bestimmte Nährstoffe für einen biologischen Aufschluss der Stoffmischung eingetragen werden sollen. Auf die Diffusionsbedingungen kann je nach Anwendungsfall über den pH-Wert, die Temperatur und den Salzgehalt Einfluss genommen werden.

Obwohl reagierende wässrige Stoffgemische grundsätzlich in erfindungsgemäßer Weise behandelt werden können, wenn sie ein Puffersystem bilden, können bei der Behandlung von wässrigen Biomassen, wie Faulschlämmen, Gärresten, Gülle und dgl., deren technologischen Eigenschaften in besonders günstiger Weise verbessert werden. Diese Biomassen bilden nämlich einen Carbonatpuffer, auf dessen Dissoziationsgleichgewicht durch das diffusionsbedingte Abscheiden von Hydrogencarbonat derart Einfluss auf die Biomasse genommen werden kann, dass sich beispielsweise das Entwässerungsverhalten in überraschender Weise entscheidend verbessern lässt. Außerdem treten Nachreaktionen auf, die die Qualität des Filtrats einer nachgeschalteten Schlammentwässerungsstufe erheblich verbessern. So zeigen sich deutlich geringere CSB- und Ammoniumbelastungen, zumal freiwerdendes Ammoniak aus der Biomasse ausgast und durch eine Waschung, z. B. mit Schwefelsäure als Ammoniumsulfat, niedergeschlagen werden kann.

Das wässrige Lösungsmittel mit dem eindiffundierten Hydrogencarbonat wird einem Sammelbehälter zugeleitet, in dem das Kohlendioxid ausgasen kann, das durch den Zerfall des Hydrogencarbonats in Kohlendioxid und Hydroxid gebildet wird, soweit es nicht selbst aus der Stoffmischung in das wässrige Lösungsmittel eindiffundiert ist. Das entgaste Lösungsmittel kann dann in einem Kreislauf wieder der porösen Trennschicht zugeführt werden, sodass eine fortlaufende Abscheidung des Hydrogencarbonats aus der Biomasse erfolgt.

Zur Durchführung des erfindungsgemäßen Verfahrens kann von einem üblichen Reaktorbehälter für die reagierende, wässrige Stoffmischung ausgegangen werden. Es braucht lediglich in den Reaktorbehälter eine an eine Zu- und Ableitung für ein wässriges Lösungsmittel angeschlossene Filtereinrichtung vorgesehen zu werden, die eine poröse Trennschicht zwischen dem wässrigen Lösungsmittel und der Stoffmischung aufweist. Über diese poröse Trennschicht wird aufgrund der osmotischen Druckverhältnisse eine Diffusion von Komponenten, die Einfluss auf das Dissoziationsgleichgewicht des Puffersystems der Stoffmischung nehmen, in das wässrige Lösungsmittel erreicht, was zu einem Verschieben der Stoffkonzentrationen innerhalb der Stoffmischung führt und dadurch Gelegenheit gibt, auf die technologisch relevanten Eigenschaften der Stoffmischung einzuwirken.

Um hinsichtlich der angestrebten Diffusionseigenschaften vorteilhafte Verhältnisse zu schaffen, kann die poröse Trennschicht eine semipermeable Membran aufweisen.

Zum Entgasen des mit den aus der Stoffmischung ausdiffundierten Komponenten beladenen Lösungsmittels ist die Abflussleitung der Filtereinrichtung mit einem Sammelbehälter verbunden, der in einen Kreislauf des wässrigen Lösungsmittels eingebunden ist, sodass nach einer Entgasung des Lösungsmittels im Sammelbehälter das Lösungsmittel wieder der Filtereinrichtung zugeführt werden kann.

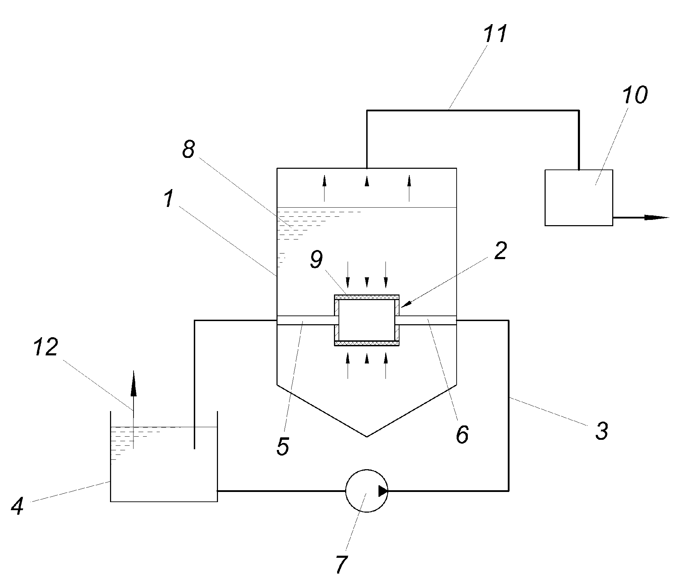

Anhand der Zeichnung wird das erfindungsgemäße Verfahren an einem Ausführungsbeispiel näher erläutert. Es wird eine erfindungsgemäße Vorrichtung zur Behandlung von reagierenden Stoffgemischen in einem schematischen Blockschaltbild gezeigt.

Die dargestellte Vorrichtung zur Behandlung einer wässrigen Stoffmischung, im Fall des Ausführungsbeispiels eine wässrige Biomasse, die ein Carbonatpuffersystem bildet, weist einen die Stoffmischung aufnehmenden Reaktorbehälter 1 auf, in dem eine Filtereinrichtung 2 vorgesehen ist, die in einen Kreislauf 3 für ein wässriges Lösungsmittel, beispielsweise ein enthärtetes Wasser, eingebunden ist. Der Kreislauf 3 umfasst einen Sammelbehälter 4, in dem die Ableitung 5 der Filtereinrichtung 2 mündet. Die Zuleitung 6 der Filtereinrichtung 2 ist über eine Lösungsmittelpumpe 7 mit dem Sammelbehälter 4 verbunden. Die Filtereinrichtung 2 trennt den Strom des wässrigen Lösungsmittels von der Stoffmischung 8 innerhalb des Reaktorbehälters 1 mit Hilfe einer porösen Trennschicht 9, die vorzugsweise eine semipermeable Membran umfasst.

Die Abgase aus dem Reaktorbehälter 1 werden einem Wäscher 10 zugeführt, in dem die aus der Stoffmischung 8 im Reaktorbehälter 1 anfallenden und über eine Abgasleitung 11 aus dem Reaktorbehälter 1 abgeführten Stoffe niedergeschlagen werden. Beim Einsatz einer Biomasse als Stoffmischung 8, beispielsweise eines Faulschlammes, ergibt sich ein Carbonatpuffer. Dies bedeutet, dass sich Ammoniumhydrogencarbonat entsprechend der Reaktionsgleichung

NH₄HCO₃ ↔ NH₄⁺ + HCO₃⁻

in Ammoniumionen und Hydrogencarbonationen dissoziiert und aus diesen Komponenten wieder rückbildet. Die Ammoniumionen NH₄⁺ zerfallen wiederum in frei werdendes Ammoniak und Wasserstoffionen

NH₄⁺ ↔ NH₃ + H⁺.

Das in der Biomasse enthaltene Ammoniumcarbonat bedingt ebenfalls ein Puffersystem, wobei das Ammoniumcarbonat in Ammoniak, Kohlendioxid und Wasser dissoziiert.

(NH₄)₂ CO₃ ↔ NH₃ + CO₂ + H₂O.

Das entstehende Hydrogencarbonat kann über die poröse Trennschicht 9 der Filtereinrichtung 2 teilweise in das wässrige Lösungsmittel diffundieren, wo es in Kohlendioxid und Hydroxid zerfällt. Das aus dem Ammoniumcarbonat freigesetzte Kohlendioxid kann ebenfalls fortlaufend aus der wässrigen Biomasse in das wässrige Lösungsmittel diffundieren, sodass im Sammelbehälter 4 das Lösungsmittel durch das freiwerdende Kohlendioxid entgast werden kann, wie dies durch den Pfeil 12 angedeutet wird.

Das in der Biomasse freiwerdende Ammoniak wird mit dem Abgas über die Abgasleitung 11 dem Wäscher 10 zugeführt, in dem das Abgas mit einer Säure, beispielsweise einer Schwefelsäure, gewaschen wird, sodass sich das Ammoniak im Beispielsfall als Ammoniumsulfat im Wäscher 10 niederschlägt.

Aufgrund insbesondere der fortlaufenden Abscheidung von Hydrogencarbonat und den Ausgasen von Ammoniak entsteht ein offenes Puffersystem mit der Wirkung, dass sich die Dissoziationsgleichgewichte entsprechend verlagern und dadurch vermieden werden kann, dass sich für die angestrebten Eigenschaften der Stoffmischung ungünstige Anreicherungen von Reaktionskomponenten oder salzartigen Rückständen ergeben, wie sie sonst aufgrund der bei einem geschlossenen Puffersystem gegebenen Dissoziationsgleichgewichte unvermeidbar sind.

## Patentansprüche

1. Verfahren zur Behandlung einer wässrigen Stoffmischung (8), die ein Puffersystem bildet, **dadurch gekennzeichnet, dass** wenigstens eine das Dissoziationsgleichgewicht des Puffersystems verschiebende Komponente durch ein wässriges Lösungsmittel aus der wässrigen Stoffmischung (8) abgeschieden wird, in das die abzuscheidende Komponente durch eine poröse Trennschicht (9) zwischen der Stoffmischung (8) und dem Lösungsmittel diffundiert.

2. Verfahren nach Anspruch 1, **dadurch gekennzeichnet, dass** als Stoffmischung (8) eine wässrige, einen Carbonatpuffer bildende Biomasse behandelt wird, wobei Hydrogencarbonat und Kohlendioxid durch Diffusion aus der Stoffmischung (8) abgeschieden und mit dem wässrigen Lösungsmittel zum Ausgasen von Kohlendioxid in einen Sammelbehälter (4) geleitet wird, bevor das entgaste Lösungsmittel wieder der porösen Trennschicht (9) in einem Kreislauf (3) zugeführt wird.

3. Vorrichtung zur Durchführung des Verfahrens nach Anspruch 1 oder 2 mit einem Reaktorbehälter (1) für eine wässrige, ein Puffersystem bildende Stoffmischung (8), **dadurch gekennzeichnet, dass** in den Reaktorbehälter (1) eine an eine Zu- und Ableitung (6, 5) für ein wässriges Lösungsmittel angeschlossene Filtereinrichtung (2) vorgesehen ist, die eine poröse Trennschicht (9) zwischen dem wässrigen Lösungsmittel und der Stoffmischung (8) aufweist.

4. Vorrichtung nach Anspruch 3, **dadurch gekennzeichnet, dass** die poröse Trennschicht (9) eine semipermeable Membran umfasst.

5. Vorrichtung nach Anspruch 3 oder 4, **dadurch gekennzeichnet, dass** die Ableitung (5) der Filtereinrichtung (2) in einem Sammelbehälter (4) mündet, der in einen Kreislauf (3) des wässrigen Lösungsmittels eingebunden ist.
